# EUROPÄISCHE PATENTANMELDUNG

(11) **EP 4 756 857 A1**
(43) Veröffentlichungstag der Anmeldung: **10.06.2026**
(21) Anmeldenummer: 24217611.3
(22) Anmeldetag: 04.12.2024
(51) Int. Cl.: H01H 39/00, H01R 9/26, H02B 1/052

(54) **PYROTECHNISCHES SCHALTELEMENT**

(71) Anmelder: Miba Resistors Austria GmbH, 4663 Laakirchen (AT)
(72) Erfinder: Löffler, Patrick, 3902 Vitis (AT); Wallinger, Gebhard, 4810 Gmunden (AT); Riautschnig, Benedikt, 3250 Wieselburg-Land (AT)
(74) Vertreter: Jell, Friedrich

(57) **Zusammenfassung**

Es wird ein pyrotechnisches Schaltelement (1), eine Tragschiene (2) mit diesem pyrotechnischen Schaltelement (1) sowie ein Schaltschrank gezeigt. Um das pyrotechnische Schaltelement (1) standfest und sicher montieren zu können, wird vorgeschlagen, dass das pyrotechnische Schaltelement (1) im Befestigungsbereich (10) eine zur Montage an einer Tragschiene (2), insbesondere Hutschiene, ausgebildete Tragschienenaufnahme (11) mit zumindest einem beweglichen Rastelement (12) zum Einrasten in einen Hinterschnitt (2a) der Tragschiene (2) aufweist.

## Beschreibung

Die Erfindung betrifft ein pyrotechnisches Schaltelement mit einem Isoliergehäuse und zumindest zwei elektrischen Außenanschlüssen am Isoliergehäuse, mit zumindest einer pyrotechnischen Ladung im Isoliergehäuse, mit einem im Isoliergehäuse in eine Richtung beweglich vorgesehenen Überbrückungselement, das nach Zündung der pyrotechnischen Ladung in insbesondere translatorische, Bewegungsrichtung versetzt eine elektrische Verbindung zwischen den Außenanschlüssen entweder trennt oder diese herstellt, und mit einem Befestigungsbereich zur Montage des pyrotechnischen Schaltelements.

Um pyrotechnische Schaltelemente montieren zu können, ist es bekannt, an deren Isoliergehäuse einander gegenüberliegende Flanschabschnitte mit Befestigungslöchern für Montageschrauben vorzusehen, die dem Isoliergehäuse vorkragen.

Löst eine pyrotechnische Ladung im pyrotechnischen Schaltelement aus, um damit eine elektrische Verbindung zwischen zumindest zwei Außenanschlüssen des pyrotechnischen Schaltelements entweder zu trennen oder diese herzustellen, werden die Flanschabschnitte unter anderem mit einer Rückstoßkraft der pyrotechnischen Ladung im Isoliergehäuse belastet. Sowohl der Befestigungsbereich des pyrotechnischen Schaltelements, in weitere Folge die Montageschrauben sowie der Untergrund, an dem das pyrotechnische Schaltelement befestigt ist, müssen diese mechanischen Kräfte standfest aufnehmen können. Deswegen sind bekannte pyrotechnische Schaltelemente in ihren Befestigungsbereichen massiv ausgeführt - was aber nachteilig das Gewicht erhöht. Zudem sind bekannte pyrotechnische Schaltelemente vergleichsweise aufwendig in deren Montage, da nicht nur eine standfeste Befestigung, sondern auch eine exakte Ausrichtung gewährleistet werden muss, um die Außenanschlüsse exakt zu positionieren - beispielsweise wenn diese an eine Sammelschiene - auch bekannt unter Busbar - angeschlossen werden müssen.

Die Erfindung hat sich daher die Aufgabe gestellt, ein pyrotechnisches Schaltelement in der Konstruktion im Befestigungsbereich derart zu verändern, dass trotz hoher Standfestigkeit die Montage handhabungsfreundlich und einfach möglich ist.

Die Erfindung löst die gestellte Aufgabe durch die Merkmale des Anspruchs 1.

Indem das pyrotechnische Schaltelement im Befestigungsbereich eine zur Montage an einer Tragschiene ausgebildete Tragschienenaufnahme aufweist, kann dieses Schaltelement vergleichsweise handhabungsfreundlich montiert oder demontiert werden - was zur Erleichterung der Wartung und Instandhaltung beitragen kann.

Weiter kann diese Tragschienenmontage in der Handhabung erleichtert werden, wenn die Tragschienenaufnahme zumindest ein gegenüber dem Isoliergehäuse verstellbares Rastelement zum Halten des pyrotechnischen Schaltelements an der Tragschiene aufweist. Denn über das Rastelement können die vorgegebenen Anforderungen an die Ausrichtung der Außenanschlüsse des pyrotechnischen Schaltelements standfest erfüllt werden - was eine präzise und zuverlässige Verbindung für solch ein sicherheitsrelevantes Bauelement garantiert. Dies auch dann, wenn die pyrotechnische Ladung im pyrotechnischen Schaltelement auslöst und damit das pyrotechnische Schaltelement mechanisch im Befestigungsbereich belastet. Denn solch eine erfindungsgemäße Befestigung an einer Tragschienen ist auch vergleichsweise mechanisch belastbar - was der Standfestigkeit des pyrotechnischen Schaltelements weiter zugutekommt.

Hierbei ist beispielsweise vorstellbar, dass das verstellbare Rastelement zum Hintergreifen der Tragschiene ausgebildet ist. Hierzu kann das Rastelement beispielsweise eine Rastnase aufweisen. Diese Rastnase kann beispielsweise ein Kopf eines Rasthakens als Rastelement ausbilden.

Die Tragschiene ist beispielsweise eine Hutschiene. Die Hutschiene kann beispielsweise eine u-förmige Hutschiene gemäß Norm DIN EN 60715:2018-07 sein.

Vorzugsweise weist die Tragschienenaufnahme zumindest eine Montagenase für ein Hintergreifen der Tragschiene auf, wobei die Montagenase dem verstellbaren Rastelement an der Tragschienenaufnahme gegenüberliegt und mit diesem zum Halten des pyrotechnischen Schaltelements an der Tragschiene zusammenwirkt. Diese Konstruktion im Bereich der Tragschienenaufnahme kann beispielsweise dafür sorgen, dass das pyrotechnische Schaltelement fest an der Tragschiene montiert ist und sich auch nicht unbeabsichtigt lösen kann. Dies gilt insbesondere bei auf den Befestigungsbereich des Schaltelements wirkenden mechanischen Kräften, die durch das Zünden der pyrotechnischen Ladung im Schaltelement und einer damit einhergehenden dynamischen Bewegung des Überbrückungselements entstehen. Die Standfestigkeit des Schaltelements kann dadurch weiter verbessert werden.

Durch das Zusammenwirken von Montagenase und Rastelement wird zudem die Positionierung des Schaltelements weiter verbessert - was eine sichere elektrische Anbindung dieses sicherheitsrelevanten Bauelements sicherstellen kann.

Beispielsweise wird die Montagenase vom Isoliergehäuse ausgebildet und/oder ist diese Montagenase unbeweglich gegenüber dem Isoliergehäuse.

Beispielsweise ist für das Halten des pyrotechnischen Schaltelements an der Tragschiene vorstellbar, das verstellbare Rastelement, insbesondere linear, verschiebbar am Isoliergehäuse zu lagern. Dies erleichtert die Handhabung weitere - und zwar insbesondere, wenn das Rastelement in dessen Rastposition durch eine auf sie wirkende Feder gehalten wird.

Vorstellbar ist beispielsweise weiter, dass das verstellbare Rastelement geneigt, insbesondere quer, zu einer Längsrichtung der Tragschienenaufnahme verstellbar ist.

Vorstellbar ist auch, dass das verstellbare Rastelement elastisch federnd ausgebildet ist. Zur weiteren Vereinfachung der Konstruktion kann vorgesehen sein, dass das verstellbare Rastelement einen Rasthaken aufweist. Damit ist das Rastelement das pyrotechnische Schaltelement sicher und stabil in einer gewünschten Position zu halten - dies auch bei vergleichsweise hohen mechanischen Belastungen.

Zudem ist zur weiteren Vereinfachung der Konstruktion vorstellbar, dass das Rastelement vom Isoliergehäuse ausgebildet wird. Damit ist beispielsweise die mechanische Anbindung an die Tragschiene weiter verbesserbar - bei reduzierter Komplexität kann sich so eine weiter erhöhte Standfestigkeit des pyrotechnischen Schaltelements ergeben.

Weist beispielsweise das pyrotechnische Schaltelement im Befestigungsbereich eine durchgehend, insbesondere linear, verlaufende Tragschienenaufnahme für ein in Längsrichtung der Tragschienenaufnahme ausschließlich kraftschlüssiges Halten an der Tragschiene auf, kann dieses auch nach dessen Montage noch entlang der Tragschiene verschoben werden. Dies ermöglicht eine einfache und schnelle Justierung des Schaltelements in seiner endgültigen Position. Die Montage ist damit flexibler und einfacher möglich.

Um die durch die Zündung der pyrotechnischen Ladung entstehenden mechanischen Belastungen auf den Befestigungsbereich weiter zu minimieren, kann beispielsweise weiter vorgesehen sein, dass die Bewegungsrichtung des Überbrückungselements geneigt, insbesondere normal, zur Längsrichtung der Tragschienenaufnahme verläuft. Denn damit wird jene, meist horizontale, Komponente entlang der Tragschiene reduziert, was beispielsweise eine Bewegung des pyrotechnischen Schaltelements entlang der Tragschiene vermeiden kann. Dies stellt die Positionierung des Schaltelements und damit auch dessen Außenausschüsse sicher und garantiert damit auch eine verbesserte elektrische Anbindung dieses sicherheitsrelevanten Bauelements.

Die Montagelage des pyrotechnischen Schaltelements kann besonders dann sichergestellt werden, wenn beispielsweise die Bewegungsrichtung des Überbrückungselements quer zur Längsrichtung der Tragschienenaufnahme verläuft. Dieser Verlauf kann -konstruktiv einfach gelöst- horizontal oder vertikal sein.

Die Kraftübertragung des Befestigungsbereichs auf die Tragschiene kann weiter verbessert werden, wenn der Boden der Tragschienenaufnahme einen ebenen Bodenbereich für einen Sitz an der Tragschiene, insbesondere an zumindest einem Tragschienenschenkel der Tragschiene, aufweist. Zudem kann dies die Positionierung des Schaltelements an der Tragschiene aufgrund der Vermeidung eines Spiels weiter verbessern. Der Sitz kann nämlich eine stabilere Anbindung an die Tragschiene bieten - was zudem die in Richtung des Sitzes wirkenden mechanische Belastung auf das Rastelement vermindert und damit die Standfestigkeit des Schaltelements erhöht.

Beispielsweise weist das pyrotechnische Schaltelement einen Aktivierungsanschluss am Isoliergehäuse zur Aktivierung der pyrotechnischen Ladung auf, um damit die pyrotechnische Ladung sicherer zu aktivieren. Über den beispielsweise elektrischen Aktivierungsanschluss kann außerdem eine Kontrolle über den Zündprozess verbessert und damit ein Risiko von ungewollten Zündungen weiter reduziert werden.

Die Handhabung bei Montage und Instandsetzung kann beispielsweise weiter erleichtert werden, wenn die Außenanschlüsse und der Aktivierungsanschluss in einander gegenüberliegenden Endbereichen an der Frontseite des Isoliergehäuses angeordnet sind.

Das erfindungsgemäße pyrotechnische Schaltelement kann sich insbesondere für eine Tragschiene, insbesondere Hutschiene, eignen.

Vorzugsweise können das erfindungsgemäße pyrotechnische Schaltelement oder die Tragschiene bei einer elektrischen Einrichtung und/oder Anlage verwendet werden. Diese Einrichtung und/oder Anlage kann beispielsweise ein Niederspannungsnetz, einen Wechselrichter, eine PV-Anlage und/oder einen elektrischen Batteriespeicher mit umfassen. Auch ist eine Verwendung bei einem Sicherungs- und/oder Schaltkasten vorstellbar.

In den Figuren ist der Erfindungsgegenstand anhand eines Ausführungsbeispiels dargestellt. Es zeigen
- Fig. 1: eine Frontansicht auf ein pyrotechnisches Schaltelement an einer Tragschiene,
- Fig. 2: eine Seitenansicht der Fig. 1 und
- Fig. 3: eine Schnittansicht nach III-III der Fig. 1.

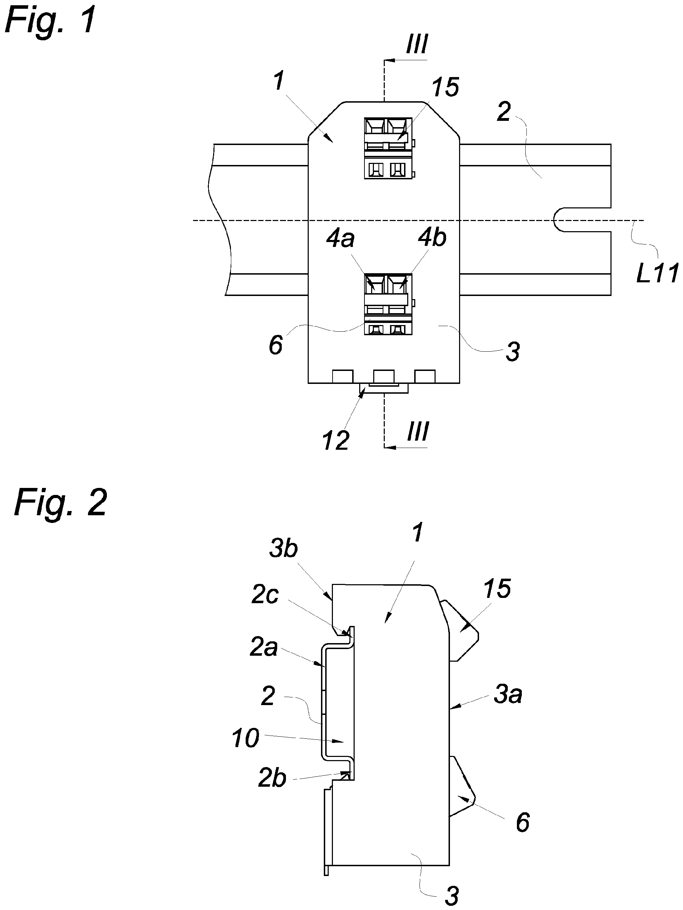

Nach Fig. 1 ist ein pyrotechnisches Schaltelement 1 nach einem Ausführungsbeispiel an einer als Hutschiene gemäß Norm DIN EN 60715:2018-07 ausgebildeten Tragschiene 2 dargestellt. Die Tragschiene 2 verläuft im Ausführungsbeispiel horizontal. Das pyrotechnische Schaltelement 1 hat ein Isoliergehäuse 3, das beispielsweise aus Kunststoff ist, und zwei elektrische Außenanschlüsse 4a, 4b am Isoliergehäuse 3. Die elektrischen Außenanschlüsse 4a, 4b sind beispielsweise jeweils als Klemmanschlüsse 6 ausgeführt. Es sind aber auch Schraubanschlüsse, Busbars, etc. als elektrische Außenanschlüsse 4a, 4b am Isoliergehäuse 3 vorstellbar - was nicht dargestellt worden ist.

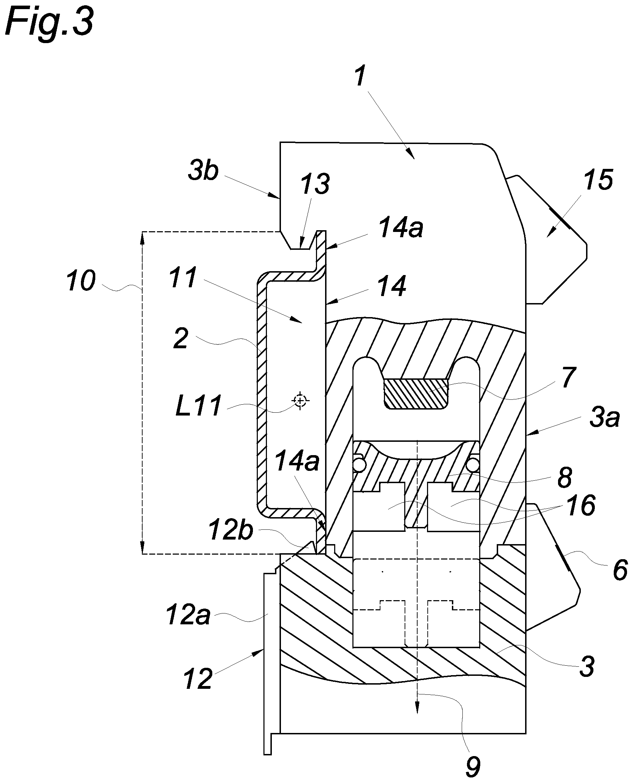

Im Isoliergehäuse 3 ist eine von pyrotechnischen Schaltelementen 1 bekannte pyrotechnische Ladung 7 und auch ein Überbrückungselement 8 vorgesehen, das zumindest abschnittsweise elektrisch leitend ausgebildet ist. In der in Fig. 3 dargestellten Verbindungslage des Überbrückungselement 8 verbindet das Überbrückungselement 8 die Außenanschlüsse 4a, 4b elektrisch, und stellt somit den Strompfad 16 zwischen ihnen her.

Das Überbrückungselement 8 ist im Isoliergehäuse 3 in einer Bewegungsrichtung 9 translatorisch beweglich vorgesehen. Dies derart, dass nach Zündung der pyrotechnischen Ladung 7 das Überbrückungselement 8 in die Bewegungsrichtung 9 versetzt und so die elektrische Verbindung zwischen den beiden Außenanschlüssen 4a, 4b trennt, die vor der Zündung der pyrotechnischen Ladung 7 bestand. Die Trennlage des Überbrückungselements 8 ist in Fig. 3 strichliert eingezeichnet. Diese Trennung der elektrischen Verbindung kann beispielsweise aus sicherheitstechnischen Gründen erfolgen. Es ist aber auch vorstellbar, dass anstatt der Trennung diese elektrische Verbindung hergestellt wird - was nicht dargestellt worden ist.

Das pyrotechnische Schaltelement 1 kann zudem montiert werden und weist hierfür einen Befestigungsbereich 10 auf, der in Fig. 2 und 3 besser zu erkennen ist.

Erfindungsgemäß ist der Befestigungsbereich 10 besonders ausgebildet. Dies, indem das pyrotechnische Schaltelement 1 im Befestigungsbereich 10 eine Tragschienenaufnahme 11 aufweist. Die Tragschienenaufnahme 11 ist dazu ausgebildet, die Tragschiene 2 zumindest teilweise aufzunehmen.

Damit kann das pyrotechnische Schaltelement 1 handhabungsfreundlich montiert sowie auch hinsichtlich der Außenanschlüsse 4a, 4b exakt ausgerichtet und positioniert werden. Dies unter anderem auch deshalb, weil die Tragschienenaufnahme 11 ein Rastelement 12 aufweist, das zum Isoliergehäuse 3 verstellbar und damit beweglich ist, um so das pyrotechnische Schaltelement 1 an der Tragschiene 2 sicher zu halten. Zu diesem Halten wird - wie in Fig. 3 zu erkennen - die Tragschiene 2 hintergriffen.

Das pyrotechnische Schaltelement 1 weist zudem an der Tragschienenaufnahme 11 eine unbewegliche Montagenase 13 auf, die dem verstellbaren Rastelement 12 an der Tragschienenaufnahme 11 gegenüberliegt. Die Montagenase 13 hintergreift die Tragschiene 2. Zudem wirkt die Montagenase 13 mit dem verstellbaren Rastelement 12 zum Halten des pyrotechnischen Schaltelements 1 an der Tragschiene 2 zusammen.

Das verstellbare Rastelement 12 weist einen Schieber 12a mit einem nasenförmigen Schieberkopf 12b auf und ist linear verschiebbar am Isoliergehäuse 3 gelagert, nämlich quer zur Längsrichtung L11 der Tragschienenaufnahme 11. Zudem weist das Rastelement 12 eine nicht darstellte Feder auf, die den Schieber 12a mit dem Hakenkopf in Richtung der anschlagbegrenzten Raststellung des Rastelement 12 federbelastet, welche Raststellung in Fig. 2 und 3 erkannt werden kann. Die Feder des Rastelements greift hierzu am Schieber 12 und Isoliergehäuse 3 an.

Bei der Montage des pyrotechnischen Schaltelements 1 wird zuerst die Montagenase 13 an der Tragschiene 2 eingehängt. Dann erfolgt ein Aufdrücken des pyrotechnischen Schaltelements 1 an die Tragschiene 2, bei der das bewegliche Rastelement 12 eine lineare Ausweichbewegung quer zur Längsrichtung L11 der Tragschienenaufnahme 11 durchführt und dann anschließend an der Tragschiene 2, diese hintergreifend, einrastet. Die Feder stellt sicher, dass nach der Ausweichbewegung das Rastelement 12 die anschlagbegrenzte Raststellung wieder einnimmt und auch in dieser Raststellung verbleibt. Dies stellt eine positionsgenaue und standfeste Befestigung des pyrotechnischen Schaltelements 1 an der Tragschiene 2 sicher.

Diese Befestigung über das Rastelement 11 zieht das pyrotechnische Schaltelement 1 auch an die Tragschiene 2 an, was neben einer formschlüssigen Verbindung auch zu einer kraftschlüssigen Verbindung führt. Um Letzteres weiter zu optimieren, weist der Boden 14 des pyrotechnischen Schaltelements 1 im Ausführungsbeispiel mehrere ebene Bodenbereiche 14a, 14b auf, die an jener Seite der frei auskragenden Tragschienenschenkel 2b, 2c an einem u-förmigen Grundkörper 2a der Tragschiene 2 anliegen.

Die erfindungsgemäße Montage des pyrotechnischen Schaltelements 1 an der Tragschiene 2 ermöglicht aber weiterhin dessen Positionierung entlang der Tragschiene 2. Dies, weil in Längsrichtung L11 der Tragschienenaufnahme 11 gesehen keine form- und/oder stoffschlüssige Verbindung besteht. In diese Richtung besteht ausschließlich eine kraftschlüssige Verbindung zwischen dem pyrotechnischen Schaltelement 1 und der Tragschiene 2. Mit einem Überwinden des Kraftschlusses kann damit das pyrotechnische Schaltelement 1 entlang der Tragschiene 2 verschoben werden.

Zudem kann nach Fig. 1 erkannt werden, dass die mechanischen Belastungen durch das Zünden der pyrotechnischen Ladung 7 und das damit in translatorische Bewegungsrichtung 9 beschleunigte Überbrückungselement 8 normal und damit geneigt zur Längsrichtung L11 der Tragschienenaufnahme 11 verläuft. Dies vermeidet unter anderem eine Parallelität mit der Längsrichtung L2 der Tragschiene 2. Damit werden alle sich aus der dynamischen Funktionalität am pyrotechnischen Schaltelement 1 ergebenden mechanischen Belastungen von der Tragschiene 2 ohne Seitenkräfte aufgenommen. Ein Versatz des pyrotechnischen Schaltelements 1 entlang der Tragschiene 2 ist damit ausgeschlossen.

Dies insbesondere dadurch, dass diese Bewegungsrichtung 9 des Überbrückungselements 8 vertikal verläuft. Damit können, durch die Bewegung des Überbrückungselements 8 entstehende Kräfte von der Tragschiene 2 auslegungskonformer aufgenommen werden. Vergleichsweise hohe mechanische Kräfte können daher standfest von der Tragschiene 2 aufgenommen bzw. über den Befestigungsbereich 10 abgetragen werden.

Diese Bewegungsrichtung 9 des Überbrückungselements 8 stellt zudem die elektrische Verbindung vom und zum pyrotechnischen Schaltelement 1 frei von mechanischen Kräften, wodurch auch dessen sicherheitstechnische Funktion stets gewährleistet werden kann. Eine standfeste und funktionssichere Montage des pyrotechnischen Schaltelements 1 ist damit geschaffen.

Zudem ist in den Figuren 1 bis 3 zu erkennen, dass das pyrotechnische Schaltelement 1 einen elektrischen Aktivierungsanschluss 15 am Isoliergehäuse 3 zur elektrischen Aktivierung der pyrotechnischen Ladung 7 aufweist. Außenanschlüsse 4a, 4b und der Aktivierungsanschluss 15 sind in einander gegenüberliegenden Endbereichen an der Frontseite 3a des Isoliergehäuses 3a angeordnet. Diese Frontseite 3a liegt der Rückseite 3b des Isoliergehäuses 3a gegenüber. Auf der Rückseite 3b des Isoliergehäuses 3a befindet sich auch der Befestigungsbereich 11 des pyrotechnischen Schaltelements 1.

Es ist aber auch vorstellbar, was nicht dargestellt ist, dass sich die Außenanschlüsse 4a, 4b und der elektrische Aktivierungsanschluss 15 an einer Stelle, beispielsweise an der in den Figuren 1 bis 3 dargestellten Stelle zum Aktivierungsanschluss 15, gemeinsam befinden.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Pyrotechnisches Schaltelement mit einem Isoliergehäuse (3) und zumindest zwei elektrischen Außenanschlüssen (4a, 4b) am Isoliergehäuse (3), mit zumindest einer pyrotechnischen Ladung (7) im Isoliergehäuse (3), mit einem im Isoliergehäuse (3) in eine Richtung beweglich vorgesehenen Überbrückungselement (8), das nach Zündung der pyrotechnischen Ladung (7) in, insbesondere translatorische, Bewegungsrichtung (9) versetzt eine elektrische Verbindung zwischen den Außenanschlüssen (4a, 4b) entweder trennt oder diese herstellt, und mit einem Befestigungsbereich (10) zur Montage des pyrotechnischen Schaltelements (1), **dadurch gekennzeichnet, dass** das pyrotechnische Schaltelement (1) im Befestigungsbereich (10) eine zur Montage an einer Tragschiene (2), insbesondere Hutschiene, ausgebildete Tragschienenaufnahme (11) mit zumindest einem gegenüber dem Isoliergehäuse (3) verstellbaren Rastelement (12) zum Halten des pyrotechnischen Schaltelements (1) an der Tragschiene (2) aufweist.

2. Pyrotechnisches Schaltelement nach Anspruch 1, **dadurch gekennzeichnet, dass** die Tragschienenaufnahme (11) zumindest eine, insbesondere vom Isoliergehäuse (3) ausgebildete, Montagenase (13) für ein Hintergreifen der Tragschiene (2) aufweist, wobei die Montagenase (13) dem verstellbaren Rastelement (12) an der Tragschienenaufnahme (11) gegenüberliegt und mit diesem zum Halten des pyrotechnischen Schaltelements (1) an der Tragschiene (2) zusammenwirkt.

3. Pyrotechnisches Schaltelement nach Anspruch 1 oder 2, **dadurch gekennzeichnet, dass** das verstellbare Rastelement (12), insbesondere linear, verschiebbar am Isoliergehäuse (3) gelagert ist und/oder dass das verstellbare Rastelement (12) geneigt, insbesondere quer, zur Längsrichtung (L11) der Tragschienenaufnahme (11) verstellbar ist.

4. Pyrotechnisches Schaltelement nach Anspruch 1 oder 2, **dadurch gekennzeichnet, dass** das, insbesondere einen Rasthaken aufweisende, verstellbare Rastelement elastisch federnd verstellbar ist und/oder dass das verstellbare Rastelement vom Isoliergehäuse (3) ausgebildet wird.

5. Pyrotechnisches Schaltelement nach einem der Ansprüche 1 bis 4, **dadurch gekennzeichnet, dass** das pyrotechnische Schaltelement (1) im Befestigungsbereich (10) eine durchgehend, insbesondere linear, verlaufende Tragschienenaufnahme (11) für ein in Längsrichtung (L11) der Tragschienenaufnahme (11) ausschließlich kraftschlüssiges Halten an der Tragschiene (2) aufweist.

6. Pyrotechnisches Schaltelement nach einem der Ansprüche 1 bis 5, **dadurch gekennzeichnet, dass** die Bewegungsrichtung (9) des Überbrückungselements (8) geneigt, insbesondere normal, zur Längsrichtung (L11) der Tragschienenaufnahme (11) verläuft.

7. Pyrotechnisches Schaltelement nach Anspruch 6, **dadurch gekennzeichnet, dass** die Bewegungsrichtung (9) des Überbrückungselements (8) quer zur Längsrichtung (L11) der Tragschienenaufnahme (11), insbesondere horizontal oder vertikal, verläuft.

8. Pyrotechnisches Schaltelement nach einem der Ansprüche 1 bis 7, **dadurch gekennzeichnet, dass** der Boden (14) der Tragschienenaufnahme (11) einen ebenen Bodenbereich (14a, 14b) für einen Sitz an der Tragschiene (2), insbesondere an zumindest einem Tragschienenschenkel (2b, 2c) der Tragschiene (2), aufweist.

9. Pyrotechnisches Schaltelement nach einem der Ansprüche 1 bis 8, **dadurch gekennzeichnet, dass** das pyrotechnische Schaltelement (1) einen, insbesondere elektrischen, Aktivierungsanschluss (15) am Isoliergehäuse (3) zur Aktivierung der pyrotechnischen Ladung (7) aufweist.

10. Pyrotechnisches Schaltelement nach Anspruch 9, **dadurch gekennzeichnet, dass** die Außenanschlüsse (4a, 4b) und der Aktivierungsanschluss (15) in einander gegenüberliegenden Endbereichen an der Frontseite des Isoliergehäuses (3) angeordnet sind.

11. Tragschiene, insbesondere Hutschiene, mit einem daran montierten pyrotechnischen Schaltelement (1) nach einem der Ansprüche 1 bis 10.

12. Elektrische Einrichtung und/oder Anlage, insbesondere Sicherungs- und/oder Schaltkasten, mit einem pyrotechnischen Schaltelement (1) nach einem der Ansprüche 1 bis 10 oder einer Tragschiene (2) nach Anspruch 11.
